# EUROPEAN PATENT SPECIFICATION

(11) **EP 4 401 163 B1**
(45) Date of publication and mention of the grant of the patent: **29.04.2026**
(21) Application number: 23874081.5
(22) Date of filing: 25.08.2023
(51) Int. Cl.: H01M 4/131, H01M 10/0525, H01M 4/62, H01M 10/052, H01M 10/0562, H01M 4/505, H01M 4/525, H01M 4/36, H01M 4/13

(54) **CATHODE FOR ALL-SOLID-STATE BATTERY, AND ALL-SOLID-STATE BATTERY COMPRISING SAME**
KATHODE FÜR FESTKÖRPERBATTERIE UND FESTKÖRPERBATTERIE DAMIT
CATHODE POUR BATTERIE ENTIÈREMENT SOLIDE ET BATTERIE ENTIÈREMENT SOLIDE LA COMPRENANT

(30) Priority: 07.11.2022 KR 20220146682
(43) Date of publication of application: 17.07.2024
(73) Proprietor: LG ENERGY SOLUTION, LTD., Seoul 07335 (KR)
(72) Inventor: KIM, Myeongsoo, Yuseong-gu, Daejeon 34122 (KR); KIM, Taegon, Yuseong-gu, Daejeon 34122 (KR)
(74) Representative: Goddar, Heinz J.
(86) International application number: PCT/KR2023/012627
(87) International publication number: WO 2024/101612

(56) References cited:
- EP-A1- 4 134 350
- WO-A1-2021/205821
- KR-A- 20130 098 372
- KR-A- 20180 076 132
- KR-A- 20210 098 246
- KR-B1- 102 449 815
- KR-B1- 102 449 815
- US-A1- 2021 242 490
- US-B2- 10 243 209

## Description

### [Technical Field]

This application claims the benefit of priority to Korean Patent Application No. 10-2022-0146682 filed on November 7, 2022, all contents of which are incorporated as a part of the present specification.

The present invention relates to a positive electrode for an all-solid-state battery and an all-solid-state battery comprising same.

### [Background Art]

Lithium secondary batteries have primarily been applied to small-scale applications such as mobile devices and laptop computers, but research has recently expanded to medium and large-scale applications such as energy storage systems (ESS) or electric vehicles (EV).

For these medium and large-scale lithium secondary batteries, unlike smaller ones, the operating environment is harsher (e.g., temperature or shock) and more batteries are needed, so safety needs to be ensured along with good performance and affordable price.

Currently, most of commercially available lithium secondary batteries utilize an organic liquid electrolyte in which lithium salts are dissolved in a flammable organic solvent, which poses a potential risk of leakage, ignition and explosion. Therefore, the use of a solid electrolyte replacing the organic liquid electrolyte has been attracting attention as an alternative to overcome the safety issues.

An all-solid-state battery consists of a positive electrode, a solid electrolyte and a negative electrode, and although sulfides and oxides can be used as the solid electrolyte for an all-solid-state battery, a sulfide-based solid electrolyte is the most preferable material in terms of lithium ion conductivity.

However, when the sulfide-based solid electrolyte is used, a positive electrode active material coated with a cobalt (Co) is not generally used for the positive electrode because of the reaction between cobalt and sulfur.

In addition, during the charge and discharge cycle of an all-solid-state battery, reactions occur at the interface between the positive electrode active material and the sulfide-based solid electrolyte, resulting in the diffusion of components such as Co, P or S at the interface, which degrades the lifetime characteristics, so it needs to be improved.

Patent Reference 3 discloses a positive electrode for an all-solid-state battery comprising a positive electrode active material, a conductive material, a first sulfide-based solid electrolyte, wherein the positive electrode active material comprises a core capable of reversible adsorption and release of lithium ions and a coating layer formed on the surface of the core, wherein the coating layer comprises the first sulfide-based solid electrolyte.

### [Prior art reference]

### [patent reference]

(Patent reference 1) Korean Patent Laid-open Publication No. 10-2010-0120153 (Publication Date: November 12, 2010)
(Patent reference 2) Korean Patent Laid-open Publication No. 10-2018-0076132 (Publication Date: July 5, 2018)
(Patent reference 3) KR102449815

### [Disclosure]

### [Technical Problem]

It is an object of the present invention to provide a positive electrode for an all-solid-state battery that includes both a sulfide-based solid electrolyte containing a bromine (Br) element and a sulfide-based solid electrolyte not containing a bromine element, wherein the sulfide-based solid electrolyte containing the bromine element is applied to the coating layer of the positive electrode active material, thereby to providea positive electrode for an all-solid-state battery having improved ionic conductivity and interfacial properties between the active material and the solid electrolyte.

Another object of the present invention is to provide an all-solid-state battery having improved electrochemical properties and life characteristics by applying the positive electrode for an all-solid-state battery.

### [Technical Solution]

The present invention provides a positive electrode for an all-solid-state battery comprising a positive electrode active material, a sulfide-based solid electrolyte, a conductive material and a binder, wherein the sulfide-based solid electrolyte comprises a first sulfide-based solid electrolyte containing a bromine (Br) element and a second sulfide-based solid electrolyte not containing a bromine (Br) element, wherein the positive electrode active material comprises a core capable of reversible adsorption and release of lithium ions; and a coating layer formed on the surface of the core, where the coating layer comprises the first sulfide-based solid electrolyte.

The first sulfide-based solid electrolyte may be represented by formula 1:

[Formula 1] LiₐM¹_{b}S_{c}X¹_{d}Brₑ,

wherein M¹ is Sn, Mg, Ba, B, Al, Ga, In, Si, Ge, Pb, N, P, As, Sb, Bi, Ti, V, Cr, Mn, Fe, Co, Ni, Cu, Y, Zr, Nb, Mo, Tc, Ru, Rh, Pd, Ag, Hf, Ta, W or La, X¹ is F, Cl, Br, I, Se, Te or O, and 0<a≤6, 0<b≤6, 0<c≤6, 0≤d≤6, and 0<e≤6,

The second sulfide-based solid electrolyte may be represented by Formula 2:

[Formula 2] LiₖM²ₗSₘX²ₙ,

wherein M² is Sn, Mg, Ba, B, Al, Ga, In, Si, Ge, Pb, N, P, As, Sb, Bi, Ti, V, Cr, Mn, Fe, Co, Ni, Cu, Y, Zr, Nb, Mo, Tc, Ru, Rh, Pd, Ag, Hf, Ta, W or La, X² is F, Cl, I, Se, Te or O, and 0<k≤6, 0<l≤6, 0<m≤6, and 0≤n≤6.

The sulfide-based solid electrolyte may have an argyrodite-type crystal structure.

The first sulfide-based solid electrolyte and the second sulfide-based solid electrolyte may be comprised in a weight ratio of 95:5 to 5:95.

The positive electrode active material may be comprised from 50 to 95 parts by weight, based on a total of 100 parts by weight of the positive electrode.

The sulfide-based solid electrolyte may be comprised in an amount of from 5 to 49 parts by weight, based on a total of 100 parts by weight of the positive electrode.

The positive electrode active material may be coated with 1 to 20 parts by weight of a first sulfide-based solid electrolyte, based on a total of 100 parts by weight of the positive electrode active material comprising the core and the coating layer.

The average particle diameter of the first sulfide-based solid electrolyte may be from 0.1 to 5 µm.

The average particle diameter of the second sulfide-based solid electrolyte may be from 0.1 to 5 µm.

The thickness of the coating layer of the positive electrode active material may be from 0.05 to 0.2 µm.

Another embodiment of the present invention provides an all-solid-state battery comprising:
a positive electrode;
a negative electrode; and
a solid electrolyte layer disposed between the positive and negative electrodes,
wherein the positive electrode comprises the positive electrode for an all-solid-state battery as described above.

### [Effects of the Invention]

According to the present invention, a positive electrode for an all-solid-state battery comprises a positive electrode active material and a sulfide-based solid electrolyte, wherein the sulfide-based solid electrolyte simultaneously comprises a first sulfide-based solid electrolyte containing a bromine (Br) element and a second sulfide-based solid electrolyte not containing a bromine element, and the first sulfide-based solid electrolyte is applied to the coating layer of the positive electrode active material, so that it is possible to maintain flexible deformation characteristics in a pressurization process in the manufacture of an all-solid-state battery, and to exhibit excellent interfacial properties as a result of an increase in the contact area between the positive electrode active material and the solid electrolyte. Furthermore, by further adding a second sulfide-based solid electrolyte that does not contain the bromine element, the positive electrode for an all-solid-state battery has improved dispersibility of the positive electrode and resistance of the electrode, thereby improving the ionic conductivity of the all-solid-state battery.

### [Description of Drawings]

FIGS. 1 and 2 are Scanning Electron Microscope (SEM) images of a cross-section of the positive electrode for an all-solid-state battery according to one embodiment of the present invention.
FIG. 3 is a Transmission Electron Microscope (TEM) image of a cross-section of the positive electrode for an all-solid-state battery according to one embodiment of the present invention.
FIG. 4 shows the results of an Energy Dispersive X-ray Spectroscopy (EDS) analysis of a cross-section of the positive electrode for an all-solid-state battery according to one embodiment of the present invention.
FIG. 5 illustrates voltage variation with a specific capacity in an all-solid-state battery according to examples and comparative examples of the present invention.
FIG. 6 illustrates the high rate characteristics of an all-solid-state battery according to examples and comparative examples of the present invention.

### [Best Mode]

Hereinafter, embodiments of the present invention are described in detail. It is noted that the terms and words used in this specification and claims are not to be construed in their ordinary or dictionary sense, but rather in a sense and concept consistent with the technical idea of the present invention, based on the principle that the inventor(s) may properly define the concept of a term to best describe his/her invention. Accordingly, it is to be understood that the compositions described in the embodiments provided in the specification are only the most preferred embodiments of the present invention and are not exhaustive of the technical ideas of the present invention, and that there may be various equivalents and variations that may substitute for them at the time of filing.

Throughout the specification, when a part "includes" a component, it means that a part may further include other components, not excludes other components, unless otherwise stated.

The average particle diameter used herein is a median diameter (D50) measured using a laser particle diameter distribution meter.

The positive electrode for an all-solid-state battery according to one embodiment of the present invention is described as follows.

The present invention relates to a positive electrode for an all-solid-state battery that improves the ionic conductivity of the all-solid-state battery, and the interfacial properties between a positive electrode active material and a solid electrolyte in the positive electrode.

In general, all-solid-state batteries do not use liquid electrolyte unlike conventional lithium ion batteries, so the positive electrode active material layer, in addition to the solid electrolyte layer, also comprises a solid electrolyte.

The wide effective contact area formed by effectively contacting the positive electrode active material and the solid electrolyte comprised in the positive electrode active material layer is an important factor in improving the charge and discharge capacity and efficiency of an all-solid-state battery so as to ensure stable ionic conductivity. Similarly, in order to improve the effective contact area of the positive electrode active material and the solid electrolyte, a pressure of about 500 Mpa or more is applied during the manufacturing process of an all-solid-state battery, and in order to solve the problem caused by the pressurization process, attempts have been made to solve it by introducing a coating layer of solid electrolyte to the positive electrode active material.

However, if a coating layer is introduced on the positive electrode active material as described above, the effective contact area between the positive electrode active material and the solid electrolyte is increased, and the resistance of the electrode is reduced, but a problem may occur that the ionic conductivity of the battery is reduced due to a decrease in the contact between the solid electrolyte formed as the coating layer of the positive electrode active material and the solid electrolyte present in the positive electrode active material layer without being formed as the coating layer. In addition, if the positive electrode is manufactured by coating all of the positive electrode active material with a solid electrolyte, voids may occur in the positive electrode active material layer, which may eventually reduce the ionic conductivity and charge/discharge efficiency of the battery.

Accordingly, in order to solve these problems, inventor(s) of the present invention confirmed that a positive electrode for an all-solid-state battery comprising a positive electrode and a sulfide-based solid electrolyte, wherein the sulfide-based solid electrolyte includes both 1) a first sulfide-based solid electrolyte containing a bromine (Br) element and 2) a second sulfide-based solid electrolyte not containing a bromine element, wherein the first sulfide-based solid electrolyte is included in a coating layer of the positive electrode active material, so that the flexible deformation property can be maintained in a pressurization process in the manufacture of an all-solid-state battery, excellent interfacial properties are exhibited as a result of an increase in the contact area between the positive electrode active material and the solid electrolyte, and the ionic conductivity and charge/discharge capacity can be improved by increasing the dispersibility of the positive electrode and improving the resistance of the electrode, and completed the present invention.

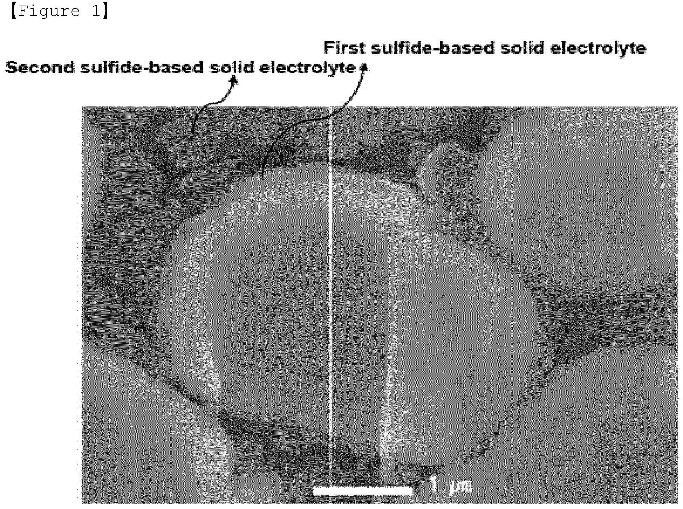

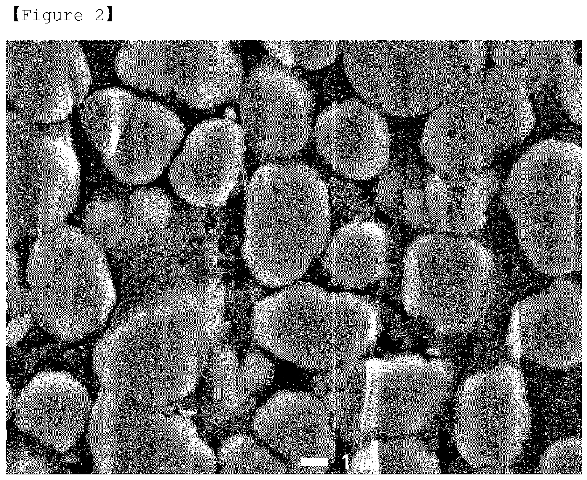

FIGS. 1 and 2 are SEM images of a cross-section of the positive electrode for an all-solid-state battery according to one embodiment of the present invention.

Referring to FIGS. 1 and 2, the positive electrode for an all-solid-state battery according to one embodiment of the present invention comprises a positive electrode active material, a sulfide-based solid electrolyte, a conductive material and a binder, wherein the sulfide-based solid electrolyte includes a first sulfide-based solid electrolyte comprising a bromine (Br) element and a second sulfide-based solid electrolyte not comprising a bromine (Br) element, wherein the positive electrode active material includes a core capable of reversible adsorption and release of lithium ions; and a coating layer formed on the surface of the core, where the coating layer comprises the first sulfide-based solid electrolyte.

The positive electrode for an all-solid-state battery simultaneously includes a first sulfide-based solid electrolyte containing a bromine (Br) element and a second sulfide-based solid electrolyte not containing a bromine element, and the first sulfide-based solid electrolyte is applied to a coating layer of positive electrode active material, so that flexible deformation characteristics can be maintained in a pressurization process in manufacturing an all-solid-state battery, and excellent interfacial properties can be exhibited as a result of an increase in the contact area between the positive electrode active material and the solid electrolyte. Furthermore, by adding a second sulfide-based solid electrolyte that does not contain the bromine element to the positive electrode for an all-solid-state battery, the dispersibility of the positive electrode is increased and the resistance of the electrode is improved, thereby improving the ionic conductivity of an all-solid-state battery.

Although not limited to any particular theory, it may be understood that the first sulfide-based solid electrolyte comprised in the positive electrode active material coating layer forms a specific crystal structure by including the bromine element, thereby inhibiting side reactions at the interface between the positive electrode active material and the solid electrolyte. Therefore, when the sulfide-based solid electrolyte essentially comprising bromine is coated on the surface of the positive electrode active material and applied to the positive electrode, the interfacial resistance between the positive electrode active material and the solid electrolyte is reduced and the ionic conductivity is increased.

Furthermore, the positive electrode for an all-solid-state battery according to the present invention includes, in addition to the first sulfide-based solid electrolyte containing bromine, a second sulfide-based solid electrolyte not containing bromine. Since the second sulfide-based solid electrolyte is capable of exhibiting excellent ductility to external pressure, it is possible to improve the ionic conductivity of an all-solid-state battery by maintaining the contact force between the solid electrolytes even when the internal pressure increases during the pressurization process of the all-solid-state battery manufacturing process or the driving process of the all-solid-state battery.

In one embodiment of the present invention, the first sulfide-based solid electrolyte may be represented by Formula 1:

[Formula 1] LiₐM¹_{b}S_{c}X¹_{d}Brₑ,

wherein M¹ is Sn, Mg, Ba, B, Al, Ga, In, Si, Ge, Pb, N, P, As, Sb, Bi, Ti, V, Cr, Mn, Fe, Co, Ni, Cu, Y, Zr, Nb, Mo, Tc, Ru, Rh, Pd, Ag, Hf, Ta, W or La, X¹ is F, Cl, Br, I, Se, Te or O, and 0<a≤6, 0<b≤6, 0<c≤6, 0≤d≤6, and 0<e≤6.

For example, in Formula 1, M¹ may be B, Si, Ge, P or N.

For example, in Formula 1, X¹ may be F, Cl, Br, I or O.

For example, the first sulfide-based solid electrolyte represented by Formula 1 may be Li₂S-P₂S₅-LiBr, Li₂S-P₂S₅-LiCl-LiBr, Li₂S-SiS₂-LiBr or a combination thereof.

In one embodiment of the present invention, the second sulfide-based solid electrolyte may be represented by Formula 2:

[Formula 2] LiₖM²ₗSₘX²ₙ,

wherein M² is Sn, Mg, Ba, B, Al, Ga, In, Si, Ge, Pb, N, P, As, Sb, Bi, Ti, V, Cr, Mn, Fe, Co, Ni, Cu, Y, Zr, Nb, Mo, Tc, Ru, Rh, Pd, Ag, Hf, Ta, W or La, X² is F, Cl, I, Se, Te or O, and 0<k≤6, 0<l≤6, 0<m≤6, and 0≤n≤6.

For example, in Formula 2, M² may be B, Si, Ge, P or N.

For example, in Formula 2, X² may be F, Cl, I or O.

For example, the second sulfide-based solid electrolyte represented by Formula 2 may be Li₂S-P₂S₅, Li₂S-P₂S₅-LiCl, Li₂S-P₂S₅-Li₂O, Li₂S-P₂S₅-Li₂O-LiI, Li₂S-SiS₂, Li₂S-SiS₂-LiI,Li₂S-SiS₂-LiCl, Li₂S-SiS₂-B₂S₃-LiI, Li₂S-SiS₂-P₂S₅-LiI, Li₂S-B₂S₃,Li₂S-GeS₂, Li₂S-SiS₂-Li₃PO₄or a combination thereof.

In one embodiment of the present invention, the sulfide-based solid electrolyte, that is, the first sulfide-based solid electrolyte and the second sulfide-based solid electrolyte, may have an argyrodite-type crystal structure.

As the sulfide-based solid electrolyte has an argyrodite-type crystal structure, the sulfide-based solid electrolyte has high purity and crystallinity, and forms a stable interfacial phase to have a high energy density, thereby greatly improving the potential stability and ionic conductivity.

In one embodiment of the present invention, the first sulfide-based solid electrolyte may be comprised in an amount of from 5 to 25 parts by weight, based on a total of 100 parts by weight of the first sulfide-based solid electrolyte and the second sulfide-based solid electrolyte. For example, the first sulfide-based solid electrolyte may be comprised in an amount of 5 parts by weight or more, 6 parts by weight or more, 7 parts by weight or more, 8 parts by weight or more, 9 parts by weight or more, or 10 parts by weight or more, or 25 parts by weight or less, 20 parts by weight or less, 15 parts by weight or less, 14 parts by weight or less, 13 parts by weight or less, 12 parts by weight or less, or 11 parts by weight or less, based on a total of 100 parts by weight of the first sulfide-based solid electrolyte and the second sulfide-based solid electrolyte. Preferably, the first sulfide-based solid electrolyte may be comprised in an amount of from 7 to 10 parts by weight, based on a total of 100 parts by weight of the first sulfide-based solid electrolyte and the second sulfide-based solid electrolyte.

When the content of the first sulfide-based solid electrolyte in the positive electrode for an all-solid-state battery according to the present invention ranges less than 5 parts by weight, based on a total of 100 parts by weight of the first sulfide-based solid electrolyte and the second sulfide-based solid electrolyte comprised in the positive electrode for an all-solid-state battery, as the content of the first sulfide-based solid electrolyte comprised in the positive electrode active material coating layer decreases, the effect of inhibiting side reaction at the interface between the positive electrode active material and the solid electrolyte decreases, and the interfacial resistance between the positive electrode active material and the solid electrolyte increases, thereby decreasing the ionic conductivity of the all-solid-state battery. When the content range of the first sulfide-based solid electrolyte exceeds 25 parts by weight, based on a total of 100 parts by weight of the first sulfide-based solid electrolyte and the second sulfide-based solid electrolyte comprised in the positive electrode for an all-solid-state battery, there may be a problem that the thickness of the coating layer comprising the first sulfide-based solid electrolyte excessively increases, resulting in the positive electrode active material being isolated in the first sulfide-based solid electrolyte which is comprised of the coating layer, thereby increasing the resistance of the electrode.

If the content of the second sulfide-based solid electrolyte in the positive electrode for an all-solid-state battery according to the present invention ranges less than 75 parts by weight based on a total of 100 parts by weight of the first sulfide-based solid electrolyte and the second sulfide-based solid electrolyte included in the positive electrode for an all-solid-state battery, there may be a problem that the ionic conductivity of the electrode is reduced due to the occurrence of voids in the positive electrode active material layer, and if it exceeds 95 parts by weight, there may be a reverse problem that the content of the first sulfide-based solid electrolyte is less than 5 parts by weight.

Therefore, in order to improve the ionic conductivity and the potential stability of the positive electrode for an all-solid-state battery according to the present invention, and to stably secure the charge and discharge capacity and life characteristics of an all-solid-state battery comprising same, the contents of the first sulfide-based solid electrolyte and the second sulfide-based solid electrolyte are preferably adjusted within the above range.

In one embodiment of the present invention, the positive electrode active material may be comprised in an amount of from 50 to 95 parts by weight, based on a total of 100 parts by weight of the positive electrode. For example, the content of the positive electrode active material may be 50 parts by weight or more, 60 parts by weight or more, 70 parts by weight or more, 75 parts by weight or more, or 80 parts by weight or more, or 95 parts by weight or less, 90 parts by weight or less, or 85 parts by weight or less, based on a total of 100 parts by weight of the positive electrode.

If the content of the positive electrode active material is less than 50 parts by weight based on a total of 100 parts by weight of the positive electrode, there may be a problem that the capacity and overall energy density of the electrode are reduced, and if it exceeds 95 parts by weight, there may be a problem that the interfacial resistance between the positive electrode active material and the solid electrolyte is increased due to the increase of voids in the positive electrode active material layer, so, in the case of the positive electrode for an all-solid-state battery according to the present invention, it is necessary to appropriately adjust the content of the positive electrode active material within the above range.

In one embodiment of the present invention, the sulfide-based solid electrolyte may be comprised in an amount of from 5 to 49 parts by weight, based on a total of 100 parts by weight of the positive electrode. The content of the sulfide-based solid electrolyte indicates the total amount of the content of the first sulfide-based solid electrolyte and the second sulfide-based solid electrolyte comprised in the positive electrode, for example, it may be 5 parts by weight or more, 6 parts by weight or more, 7 parts by weight or more, 8 parts by weight or more, 9 parts by weight or more, 10 parts by weight or more, based on a total of 100 parts by weight of the positive electrode, 11 parts by weight or more, 12 parts by weight or more, 13 parts by weight or more, 14 parts by weight or more, 15 parts by weight or more, and may be 49 parts by weight or less, 45 parts by weight or less, 40 parts by weight or less, 35 parts by weight or less, 30 parts by weight or less, 25 parts by weight or less, 24 parts by weight or less, 23 parts by weight or less, 22 parts by weight or less, 21 parts by weight or less, or 20 parts by weight or less. Preferably, the content of the sulfide-based solid electrolyte may be comprised in an amount of from 12 to 20 parts by weight, based on a total of 100 parts by weight of the positive electrode.

If the content of the sulfide-based solid electrolyte is less than 5 parts by weight based on a total of 100 parts by weight of the positive electrode, there may be a problem of decreasing the capacity and overall energy density of the electrode due to an increase in voids in the positive electrode active material layer, which increases the interfacial resistance between the positive electrode active material and the solid electrolyte. If the content exceeds 49 parts by weight, there may be a problem that the capacity and overall energy density of the electrode are reduced. Therefore, in the positive electrode for an all-solid-state battery according to the present invention, it is necessary to appropriately adjust the total content of the sulfide-based solid electrolyte, that is, the first sulfide-based solid electrolyte, and the second sulfide-based solid electrolyte, within the above range.

In one embodiment of the present invention, the positive electrode active material may be coated with from 1 to 20 parts by weight of a first sulfide-based solid electrolyte, based on a total of 100 parts by weight of the positive electrode active material including a core and a coating layer, for example, at least 1 part by weight, at least 2 parts by weight, or at least 3 parts by weight, or at most 20 parts by weight, at most 15 parts by weight, at most 10 parts by weight, at most 9 parts by weight, at most 8 parts by weight, at most 7 parts by weight, at most 6 parts by weight, or at most 5 parts by weight of the electrolyte is coated based on a total of 100 parts by weight of the positive electrode active material including a core and a coating layer.

In one embodiment of the present invention, the first sulfide-based solid electrolyte may have an average particle diameter of 0.1 to 5 µm. For example, the average particle diameter of the first sulfide-based solid electrolyte may be 0.1 to 3 µm, 0.1 to 2 µm, 0.1 to 1 µm, 0.1 to 0.9 µm, 0.1 to 0.8 µm, 0.1 to 0.7 µm, 0.1 to 0.6 µm, or 0.1 to 0.5 µm.

If the average particle diameter of the first sulfide-based solid electrolyte is less than 0.1 µm, there may be a problem that the first sulfide-based solid electrolyte particles may easily scatter and the formation of the coating layer may not smoothly proceed, and if it exceeds 5 µm, there may be problems that the thickness of the coating layer excessively increases and the coating layer is not uniformly formed, so it is preferable to appropriately adjust the first sulfide-based solid electrolyte of the positive electrode for an all-solid-state battery according to the present invention to have an average particle diameter in the above range.

In one embodiment of the present invention, the second sulfide-based solid electrolyte may have an average particle diameter of 0.1 to 5 µm. For example, the average particle diameter of the second sulfide-based solid electrolyte may be 0.1 to 3 µm, 0.1 to 2 µm, 0.1 to 1 µm, 0.1 to 0.9 µm, 0.1 to 0.8 µm, or 0.2 to 0.8 µm.

If the average particle diameter of the second sulfide-based solid electrolyte is less than 0.1 µm, there may be a problem that the particles of the second sulfide-based solid electrolyte may easily agglomerate or may not be uniformly dispersed and may be biased within the electrode, and the formation of an effective interface between the positive electrode active material and the second sulfide-based solid electrolyte may become difficult. If the diameter exceeds5µm, there may be a problem that voids may occur in the positive electrode active material layer, which may reduce the ionic conductivity of the electrode. Therefore, it is preferable to appropriately adjust the second sulfide-based solid electrolyte of the positive electrode for an all-solid-state battery according to the present invention to have an average particle diameter in the above range.

In one embodiment of the present invention, the thickness of the coating layer formed on the surface of the positive electrode active material may be from 0.05 to 0.2 µm. For example, the thickness of the coating layer may be 0.05 µm or more, 0.06 µm or more, 0.07 µm or more, 0.09 µm or more, or 0.1 µm or more, and may be 0.2 µm or less, 0.18 µm or less, 0.16 µm or less, or 0.15 µm or less.

If the thickness of the coating layer is less than 0.05 µm, the content of the first sulfide-based solid electrolyte that can be included in the positive electrode active material coating layer is reduced, and the effect of inhibiting the side reaction at the interface between the positive electrode active material and the solid electrolyte is reduced, and the interfacial resistance between the positive electrode active material and the solid electrolyte is increased, which may reduce the ionic conductivity of an all-solid-state battery. When the thickness of the coating layer exceeds 0.2 µm, there may be a problem that the positive electrode active material is isolated in the first sulfide-based solid electrolyte which is comprised of the coating layer, resulting in an increase in the resistance of the electrode.

According to the present invention, the positive electrode for an all-solid-state battery further comprise a conductive material and a binder.

The conductive material is not particularly limited as long as it is conductive without causing any chemical changes in the battery, for example, graphite, such as natural graphite or artificial graphite; carbon black, such as carbon black, acetylene black, ketjen black, channel black, furnace black, lamp black or thermal black; conductive fibers such as carbon fibers or metal fibers; metal powders such as carbon fluoride, aluminum or nickel powder; conductive whiskers such as zinc oxide or potassium titanate; conductive metal oxides such as titanium oxide; or conductive materials such as polyphenylene derivatives may be used. The conductive material may be comprised in an amount of about 0.01 to 10 parts by weight, or 0.01 to 5 parts by weight, or 0.01 to 3 parts by weight, based on a total of 100 parts by weight of the positive electrode.

The binder is a component added in consideration of the adhesion of the positive electrode active material, the sulfide-based solid electrolyte, and the conductive material in the positive electrode for an all-solid-state battery, and any polymeric binder known as available for forming an electrode in the relevant art can be used without any particular limitation.

Examples of such polymeric binder include acrylic-based binders, polyvinylidene fluoride (PVDF)-based binders, polytetrafluoroethylene (PTFE)-based binders, or butadiene rubber-based binders such as nitrile butadiene rubber (NBR). In addition to those binders, various other polymeric binders may be used. The binder may be comprised in an amount of about 0.01 to 10 parts by weight, or 0.01 to 5 parts by weight, or 0.01 to 3 parts by weight, based on a total of 100 parts by weight of the positive electrode.

The positive electrode for an all-solid-state battery according to one embodiment of the present invention may comprise a current collector and a positive electrode active material layer formed on at least one side of the current collector, wherein the positive electrode active material layer may comprise the positive electrode active material, the sulfide-based solid electrolyte, the conductive material and the binder.

The positive electrode can be manufactured according to methods well known in the art, but not limited to a particular manufacturing method, for example, by the method of mixing the positive electrode active material, the sulfide-based solid electrolyte, the conductive material, and the binder in a solvent to form a slurry-phase positive electrode compound, and applying the positive electrode compound to the positive electrode current collector.

Meanwhile, the positive electrode active material is not particularly limited as long as it is a lithium complex oxide material capable of reversible insertion and removal of lithium ions. For example, it may comprise one or more of a complex oxide of a metal of cobalt, manganese, nickel, iron, or a combination thereof; and lithium.

As a more specific example, a compound represented by any of the following formulae can be used as the positive electrode active material:LiₐA_{1-b}R_{b}D₂(wherein 0.90 ≤ a ≤ 1.8 and 0 ≤ b ≤ 0.5); LiₐE_{1-b}R_{b}O_{2-c}D_{c} (wherein 0.90 ≤ a ≤ 1.8, 0 ≤ b ≤ 0.5, and 0 ≤ c ≤ 0.05); LiE_{2-b}R_{b}O_{4-c}D_{c} (wherein 0 ≤ b ≤ 0.5, and 0 ≤ c ≤ 0.05); LiₐNi_{1-b-c}Co_{b}R_{c}D_{α} (wherein 0.90 ≤ a ≤ 1.8, 0 ≤ b ≤ 0.5, 0 ≤ c ≤ 0.05, and 0 < α ≤ 2); LiₐNi_{1-b-c}Co_{b}R_{c}O_{2-α}Z_{α}(wherein 0.90 ≤ a ≤ 1.8, 0 ≤ b ≤ 0.5, 0 ≤ c ≤ 0.05 and 0 < α < 2); LiₐNi_{1-b-c}Co_{b}R_{c}O_{2-α}Z₂(wherein 0.90 ≤ a ≤ 1.8, 0 ≤ b ≤ 0.5, 0 ≤ c ≤ 0.05 and 0 < α < 2); LiₐNi_{1-b-c}MnₚR_{c}D_{α}(wherein 0.90 ≤ a ≤ 1.8, 0 ≤ b ≤ 0.5, 0 ≤ c ≤ 0.05 and 0 < α ≤ 2); LiₐNi_{1-b-c}Mn_{b}R_{c}O_{2-α}Z_{α}(wherein 0.90 ≤ a ≤ 1.8, 0 ≤ b ≤ 0.5, 0 ≤ c ≤ 0.05 and 0 < α < 2); LiₐNi_{1-b-c}Mn_{b}R_{c}O_{2-α}Z₂(wherein 0.90 ≤ a ≤ 1.8, 0 ≤ b ≤ 0.5, 0 ≤ c ≤ 0.05 and 0 < α < 2); LiₐNi_{b}E_{c}G_{d}O₂(wherein 0.90 ≤ a ≤ 1.8, 0 ≤ b ≤ 0.9, 0 ≤ c ≤ 0.5, and 0.001 ≤ d ≤ 0.1); LiₐNi_{b}Co_{c}Mn_{d}GₑO₂(wherein 0.90 ≤ a ≤ 1.8, 0 ≤ b ≤ 0.9, 0 ≤ c ≤ 0.5, 0 ≤ d ≤0.5, and 0 ≤ e ≤ 0.1.); LiₐNiG_{b}O₂ (wherein 0.90 ≤ a ≤ 1.8 and 0.001 ≤ b ≤ 0.1); LiₐCoG_{b}O₂ (wherein 0.90 ≤ a ≤ 1.8 and 0.001 ≤ b ≤ 0.1); LiₐMnG_{b}O₂(wherein 0.90 ≤ a ≤ 1.8 and 0.001 ≤ b ≤ 0.1); LiₐMn₂G_{b}O₄(wherein 0.90 ≤ a ≤ 1.8 and 0.001 ≤ b ≤ 0.1); QO₂; QS₂; LiQS₂; V₂O₅; LiV₂O₅; LiTO₂; LiNiVO₄; Li_{(3-f)}J₂(PO₄)₃(wherein 0 ≤ f ≤ 2); Li_{(3-f)}Fe₂(PO₄)₃(wherein 0 ≤ f ≤ 2); or LiFePO₄.

In the above formulae, A is Ni, Co, Mn or a combination thereof; R is Al, Ni, Co, Mn, Cr, Fe, Mg, Sr, V, a rare earth element or a combination thereof; D is O, F, S, P or a combination thereof; E is Co, Mn or a combination thereof; Z is F, S, P or a combination thereof; G is Al, Cr, Mn, Fe, Mg, La, Ce, Sr, V or a combination thereof; Q is Ti, Mo, Mn or a combination thereof; T is Cr, V, Fe, Sc, Y or a combination thereof; and J is V, Cr, Mn, Co, Ni, Cu or a combination thereof.

Since the sulfide-based solid electrolyte has been described above, a detailed description of the sulfide-based solid electrolyte comprised in the positive electrode for the all-solid-state battery according to the present invention is omitted hereinafter.

The positive electrode current collector is typically made with a thickness of 3 to 500 µm. Such positive electrode current collector may be, but is not particularly limited to, as long asit has a high conductivity without causing any chemical changes in the battery, for example, stainless steel, aluminum, nickel, titanium, calcined carbon, or aluminum or stainless steel whose surface is treated with carbon, nickel, titanium, silver, or the like. The current collector may also have microscopic irregularities formed on its surface to increase the adhesion of the positive electrode active material, and may be in the form of a film, sheet, foil, net, porous material, foam or nonwoven material.

The positive electrode may further comprise additives such as, for example, fillers, coatings, dispersants or ionic conductivity aids, in addition to the positive electrode active material, sulfide-based solid electrolyte, conductive material, and binder described above. As the fillers, coatings, dispersants and ionic conductivity aids, known materials commonly used for electrodes of all-solid-state secondary batteries in the art can be used.

The thickness of the positive electrode may be, for example, from 70 to 150 µm.

Another embodiment of the present invention provides an all-solid-state battery comprising a positive electrode, a negative electrode and a solid electrolyte layer disposed between the positive electrode and the negative electrode, wherein the positive electrode is the positive electrode for an all-solid-state battery described above.

Since the positive electrode comprised in an all-solid-state battery has been described in detail above, the negative electrode and the solid electrolyte comprised in an all-solid-state battery are described in detail below.

The solid electrolyte layer disposed between the positive electrode and negative electrode may include, for example, a sulfide-based solid electrolyte. The sulfide-based solid electrolyte may be the same as or different from the sulfide-based solid electrolyte comprised in the positive electrode.

For the detail on the sulfide-based solid electrolyte, see the portion describing the positive electrode above.

The elastic modulus, Young's modulus, of the solid electrolyte is, for example, 35 GPa or less, 30 GPa or less, 27 GPa or less, 25 GPa or less, or 23 GPa or less. The elastic modulus, Young's modulus, of the solid electrolyte is, for example, 10 to 35 GPa, 15 to 35 GPa, 15 to 30 GPa, or 15 to 25 GPa. Pressing and/or sintering of the solid electrolyte is more easily accomplished by having an elastic modulus withinthe above ranges.

The solid electrolyte layer further comprises, for example, a binder. The binder comprised in the solid electrolyte layer can be, for example, styrene butadiene rubber (SBR), polytetrafluoroethylene, polyvinylidene fluoride, polyethylene, or the like, or any other binder used in the art. The binder of the solid electrolyte layer may be the same as or different from the binder of the positive electrode active material layer and the negative electrode active material layer.

Next, the negative electrode of an all-solid-state battery may include a negative electrode current collector and a negative electrode active material layer.

The thickness of the negative electrode active material layer is, for example, 50% or less, 40% or less, 30% or less, 20% or less, 10% or less, or 5% or less of the thickness of the positive electrode active material layer. The thickness of the negative electrode active material layer is, for example, 1 µm to 20 µm, 2 µm to 10 µm, or 3 µm to 7 µm. If the thickness of the negative electrode active material layer is too thin, the lithium dendrite formed between the negative electrode active material layer and the negative electrode current collector collapses the negative electrode active material layer, making it difficult to improve the cycle characteristics of the all-solid-state battery. If the thickness of the negative electrode active material layer is excessively increased, the energy density of the all-solid-state battery decreases and the internal resistance of the all-solid-state battery increases due to the negative electrode active material layer, making it difficult to improve the cycle characteristics of the all-solid-state battery.

The negative electrode active material layer includes, for example, a negative electrode active material that forms an alloy or a compound with lithium.

The negative electrode active material comprised in the negative electrode active material layer has, for example, a particle shape. The negative electrode active material having a particle shape has an average particle diameter of, for example, 4 µm or less, 3 µm or less, 2 µm or less, 1 µm or less, or 900 nm or less. The average particle diameter of the negative electrode active material is, for example, 10 nm to 4 µm or less, 10 nm to 3 µm or less, 10 nm to 2 µm or less, 10 nm to 1 µm or less, or 10 nm to 900 nm or less. The negative electrode active material may have an average particle diameter within the above ranges to facilitate reversible absorption and/or desorption of lithium during charge and discharge. The average particle diameter of the negative electrode active material is, for example, a volume equivalent median diameter (D50) measured using a laser particle size distribution meter.

The negative electrode active material comprised in the negative electrode active material layer includes, for example, one or more selected from a carbon-based negative electrode active material and a metallic or semi-metallic negative electrode active material.

The carbon-based negative electrode active material is, in particular, amorphous carbon. Amorphous carbon is, for example, carbon black (CB), acetylene black (AB), furnace black (FB), ketjen black (KB) or graphene, but not necessarily limited thereto, and can be any carbon classified as amorphous in the relevant art. Amorphous carbons are carbons that are not crystalline or have very low crystallinity, which are distinguished from crystalline or graphitic carbons.

A metallic or semi-metallic negative electrode active material includes one or more selected from the group consisting of, but is not necessarily limited to, gold (Au), platinum (Pt), palladium (Pd), silicon (Si), silver (Ag), aluminum (Al), bismuth (Bi), tin (Sn), and zinc (Zn), as long asit forms an alloy or compound with lithium in the relevant art. For example, nickel (Ni) is not a metallic negative electrode active material because it does not form an alloy with lithium.

The negative electrode active material layer may comprise one negative electrode active material among these negative electrode active materials, or a mixture of a plurality of different negative electrode active materials. For example, the negative electrode active material layer may comprise only amorphous carbon, or may comprise one or more selected from the group consisting of gold (Au), platinum (Pt), palladium (Pd), silicon (Si), silver (Ag), aluminum (Al), bismuth (Bi), tin (Sn), and zinc (Zn). Alternatively, the negative electrode active material layer comprises a mixture of amorphous carbon with one or more selected from the group consisting of gold (Au), platinum (Pt), palladium (Pd), silicon (Si), silver (Ag), aluminum (Al), bismuth (Bi), tin (Sn), and zinc (Zn). The mixture ratio of amorphous carbon to silver (Ag), for example, is 10:1 to 1:2, 5:1 to 1:1, or 4:1 to 2:1 by weight, but is not necessarily limited thereto, and is selected based on the desired characteristics for an all-solid-state battery. As the negative electrode active material has this composition, the cycle characteristics of an all-solid-state battery are further improved.

The negative electrode active material comprised in the negative electrode active material layer includes, for example, a mixture of first particles composed of amorphous carbon and second particles composed of metal or semi-metal. The metal or semi-metal includes, for example, gold (Au), platinum (Pt), palladium (Pd), silicon (Si), silver (Ag), aluminum (Al), bismuth (Bi), tin (Sn) or and zinc (Zn). Otherwise, the semi-metal is a semi-conductive material. The content of the second particles is 8 to 60 wt%, 10 to 50 wt%, 15 to 40 wt%, or 20 to 30 wt%, based on the total weight of the mixture. As the second particles are comprised in an amount within the above ranges, for example, the cycle characteristics of an all-solid-state battery are further improved.

The negative electrode active material layer comprises, for example, a binder. The binder may be, for example, but not necessarily limited to, styrene-butadiene rubber (SBR), polytetrafluoroethylene, polyvinylidene fluoride, polyethylene, vinylidene fluoride/hexafluoropropylene copolymer, polyacrylonitrile, polymethylmethacrylate, or any other binder known in the art. The binder may consist of a single binder or a plurality of different binders.

The negative electrode active material layer is stabilized on the negative electrode current collector by including a binder. Furthermore, cracking of the negative electrode active material layer is inhibited despite changes in the volume and/or relative position of the negative electrode active material layer during charge and discharge. For example, if the negative electrode active material layer does not include a binder, the negative electrode active material layer can be easily separated from the negative electrode current collector. In the portion where the negative electrode active material layer is separated from the negative electrode current collector, the negative electrode current collector is exposed and in contact with the solid electrolyte layer, thereby increasing the likelihood of a short circuit. The negative electrode active material layer is produced, for example, by applying a slurry to which materials comprised of the negative electrode active material layer are dispersed to the negative electrode current collector and drying it. The negative electrode active material can be stably dispersed in the slurry by including a binder. For example, when the slurry is applied to the negative electrode current collector by screen printing, it is possible to prevent clogging of the screen (e.g., clogging by agglomerates of the negative electrode active material).

The negative electrode current collector is composed of, for example, a material that does not react with lithium, that is, does not form both alloys and compounds. The material comprised of the negative electrode current collector is, for example, copper (Cu), stainless steel, titanium (Ti), iron (Fe), cobalt (Co), or nickel (Ni), but is not necessarily limited thereto, as long as it is used in the relevant art as an electrode current collector. The negative electrode current collector may be comprised of one of the metals described above, or an alloy of two or more metals or a coating material. The negative electrode current collector may be, for example, in the form of a plate or foil.

The negative electrode active material layer can further comprise conventional additives used in an all-solid-state battery, such as fillers, dispersants, ionic conductive materials, and the like.

An all-solid-state battery may be manufactured, for example, by preparing a positive electrode, a negative electrode, and a solid electrolyte layer, and then laminating these layers.

The present invention provides a battery module including the all-solid-state battery as a unit cell, a battery pack including the battery module, and a device including the battery pack as a power source.

Specific examples of the devices include, but are not limited to, a power tool powered by an electric motor; an electric vehicle, including an electric vehicle (EV), a hybrid electric vehicle (HEV), and a plug-in hybrid electric vehicle (PHEV); an electric two-wheeled vehicle, including an electric bicycle (E-bike) and an electric scooter; an electric golf cart; and a power storage system.

Hereinafter, Examples of the present invention are provided. However, Examples are presented to specifically illustrate or describe the present invention, but the present invention is not limited thereto. In addition, even matters not described herein are sufficiently to be inferred by those skilled in the art and are omitted herein.

### Manufacturing Example 1: Manufacture of a positive electrode for an all-solid-state battery

(1) 78 g of powder of LiNi_{0.8}Co_{0.1}Mn_{0.1}O₂ having a particle diameter (D50) of 5 µm as a positive electrode active material and 3.9 g of powder of Li₆PS₅Cl_{0.5}Br_{0.5}having a particle diameter (D50) of 0.4 µm as a first sulfide-based solid electrolyte were put into a container, and mixed for 1 minute at 5,000 rpm using a Lab Blender (manufactured by Waring) without using any solvents (primary mixing). Next, the mixture was subjected to high shear mixing (NOB-130 manufactured by Hosokawa Micron) at 3,000 rpm for 10 minutes to prepare a positive electrode active material composite in which a first sulfide-based solid electrolyte coating layer was formed on the surface of the positive electrode active material.
(2) 81.9 parts by weight of the prepared positive electrode active material composite, 15.6 parts by weight of Li₆PS₅Cl as a second sulfide-based solid electrolyte, 1.5 parts by weight of carbon black powder as a conductive material, and 1 part by weight of polytetrafluoroethylene (PTFE) as a binder were added in a container and mixed for 1 min at 5,000 rpm using a Lab Blender (manufactured by Waring) without using any solvent (primary mixing). Next, a shear force of 100 N was applied to the mixture and high shear mixing (PBV-0.1L manufactured byIrie Shokai) was performed to prepare a positive electrode slurry (secondary mixing).
(3) The obtained positive electrode slurry was prepared as a free-standing film using a two roll mill MR-3 (manufactured by Inoue). The film was then placed on one side of the aluminum current collector with a thickness of 15 µm and pressed to produce a positive electrode for an all-solid-state battery.

### Manufacturing Example 2: Manufacture of a positive electrode for an all-solid-state battery

In preparing the positive electrode slurry, an all-solid-state battery was prepared as in Manufacturing Example 1, except that Li₆PS₅Cl_{0.5}Br_{0.5}was used instead of Li₆PS₅Cl as the second sulfide-based solid electrolyte.

### Manufacturing Example 3: Manufacture of a positive electrode for an all-solid-state battery

In the process of preparing the positive electrode active material composite, an all-solid-state battery was prepared as in Manufacturing Example 1, except that Li₆PS₅Clwas used instead of Li₆PS₅Cl_{0.5}Br_{0.5}as the first sulfide-based solid electrolyte.

### Manufacturing Example 4: Manufacture of a positive electrode for an all-solid-state battery

In preparing the positive electrode slurry, an all-solid-state battery was prepared as in Manufacturing Example 1, except that Li₆PS₅Cl was used instead of Li₆PS₅Cl_{0.5}Br_{0.5} as the first sulfide-based solid electrolyte, and Li₆PS₅Cl_{0.5}Br_{0.5} was used instead of Li₆PS₅Cl as the second sulfide-based solid electrolyte.

### Example 1: Manufacture of an all-solid-state battery

A jig cell with a capacity of 5 mAh/cm² was manufactured by using a lithium metal with a thickness of 100 µm as the negative electrode and interposing a Li₂S-P₂S₅solid electrolyte film with a thickness of 50 µm between the positive electrode and the negative electrode manufactured in Manufacturing Example 1.

### Comparative Example 1: Manufacture of an all-solid-state battery

An all-solid-state battery was prepared as in Example 1, except that the positive electrode prepared in Manufacturing Example 2 was used instead of using the positive electrode prepared in Manufacturing Example 1.

### Comparative Example 2: Manufacture of an all-solid-state battery

An all-solid-state battery was prepared as in Example 1, except that the positive electrode prepared in Manufacturing Example 3 was used instead of using the positive electrode prepared in Manufacturing Example 1.

### Comparative Example 3: Manufacture of an all-solid-state battery

An all-solid-state battery was prepared as in Example 1, except that the positive electrode prepared in Manufacturing Example 4 was used instead of using the positive electrode prepared in Manufacturing Example 1.

### Evaluation Example 1: SEM and TEM analysis of positive electrode for an all-solid-state battery

Scanning electron microscopy (SEM) analysis was performed on the positive electrode for an all-solid-state battery prepared according to Manufacturing Example 1, and the results are shown in FIGS. 1 and 2. The SEM analysis was performed using a JEM-ARM200F microscope manufactured by JEOL.

Referring to FIG. 1, it can be seen that, for the positive electrode for an all-solid-state battery manufactured according to Manufacturing Example 1, a coating layer of a first sulfide-based solid electrolyte containing bromine is uniformly formed on the surface of the positive electrode active material.

Also, referring to FIG. 2, it can be seen that, in the case of the positive electrode for an all-solid-state battery prepared according to Manufacturing Example 1, a second sulfide-based solid electrolyte that does not contain bromine is densely located between the positive electrode active materials, so that there was a close contact at the interface of the positive electrode active materials and the second sulfide-based solid electrolyte.

### Evaluation Example 2: Transmission electron microscopy (TEM) and energy dispersive X-ray spectroscopy (EDX) analysis of positive electrode for an all-solid-state battery

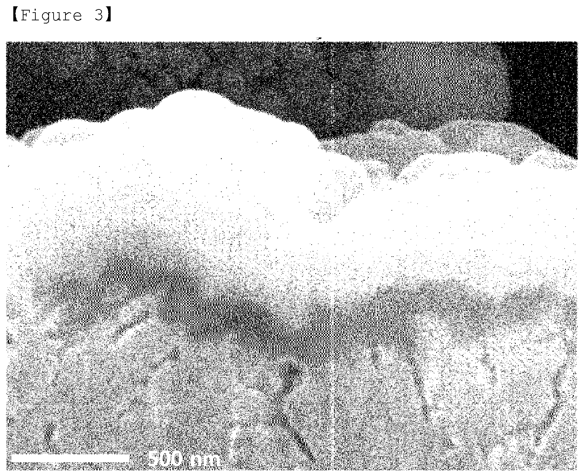

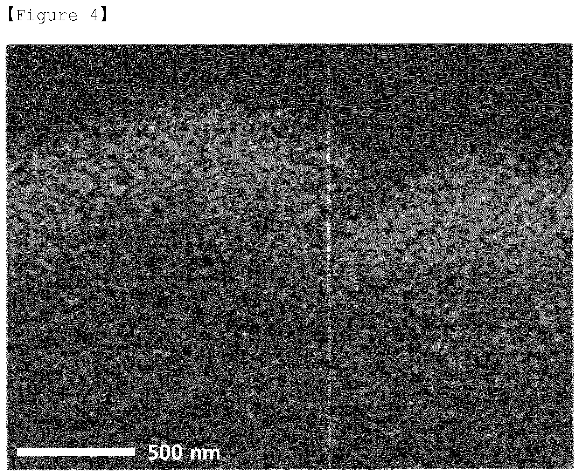

(1) In the positive electrode for an all-solid-state battery prepared according to Manufacturing Example 1, a transmission electron microscopy (TEM) analysis was performed to measure whether a coating layer was formed on the positive electrode active material, and the results are shown in FIG. 3. The TEM analysis was performed using a Titan G2 80-200 manufactured by FEI.
   Referring to FIG. 3, it can be seen that, in the case of the positive electrode for an all-solid-state battery manufactured according to Manufacturing Example 1 of the present invention, a coating layer of a sulfide-based solid electrolyte was uniformly formed on the surface of the positive electrode active material.
(2) Furthermore, an EDX (energy dispersive X-ray spectroscopy) experiment was performed to measure the bromine (Br) composition in the first sulfide-based solid electrolyte comprised in the positive electrode active material coating layer in the positive electrode for an all-solid-state battery prepared according to Manufacturing Example 1, and the results are shown in FIG. 4.The EDX was measured using JSM7900F manufactured by JEOL.

As shown in FIG. 4, in the case of the positive electrode for an all-solid-state battery prepared according to Manufacturing Example 1, it was found that the first sulfide-based solid electrolyte was present with a bromine-rich composition in the coating layer formed on the surface of the positive electrode active material.

### Evaluation Example 3: Analysis of charge and discharge characteristics

For each all-solid-state battery of Example 1, Comparative Example 1 to Comparative Example 3, the charge and discharge characteristics were evaluated by the following charge and discharge tests.

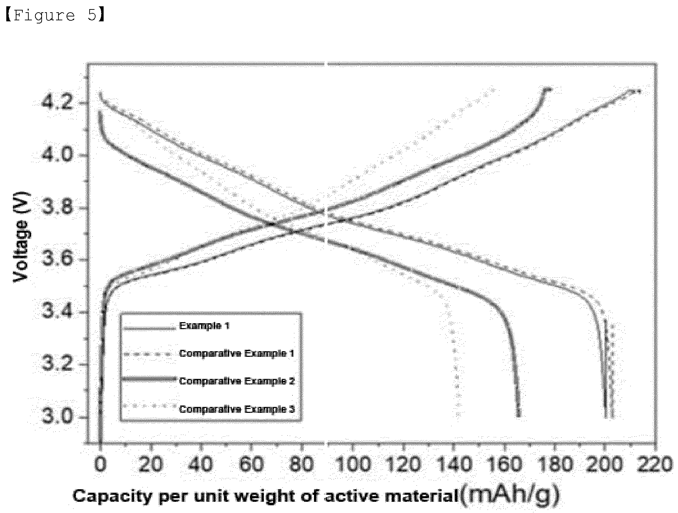

The batteries were charged at a C-rate of 0.1C until the voltage reached 4.25V (vs. Li), then cut-off at a rate of 0.05C while maintaining a voltage of 4.25V (vs. Li). They were then discharged at a C-rate of 0.1C until the voltage reached 3.0V (vs. Li) at discharge (1^{st} cycle). The results are shown in Figure 5 below.

Referring to FIG. 5, it can be seen that the all-solid-state battery according to Example 1 exhibits a level of reversible capacity and energy density approximately corresponding to those of the all-solid-state battery according to Comparative Example 1, and exhibits a higher reversible capacity and energy density compared to the all-solid-state batteries according to Comparative Examples 2 and 3.

### Evaluation Example 4: Analysis of high rate Characteristics

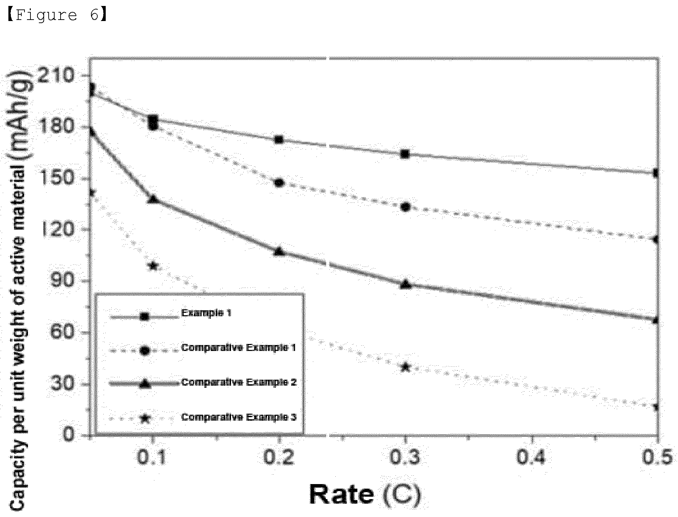

For each of the all-solid-state batteries of Example 1, Comparative Example 1 to Comparative Example 3, the change in discharge capacity with each c-rate after charging and discharging in 3.0-4.25 V at 0.1 C, 0.2 C, 0.3 C or 0.5 C is shown in FIG. 6.

Referring to FIG. 6, it can be seen that the all-solid-state battery according to Example 1 has improved high rate characteristics due to improved ionic conductivity and interfacial properties between the active material and the solid electrolyte compared to the all-solid-state batteries of Comparative Examples 1 to 3.

In particular, it was confirmed that, as a result of the composition that a second sulfide-based solid electrolyte not containing the bromine element was formed in the coating layer of the positive electrode active material, and a first sulfide-based solid electrolyte containing the bromine element was formed in a region which was not in the coating layer of the positive electrode active material, which was caused by interchangeably applying the compositions of the first sulfide-based solid electrolyte and the second sulfide-based solid electrolyte, as compared to Example 1, the high rate characteristics of the all-solid-state battery were significantly reduced. Accordingly, it can be seen that the high rate characteristics of an all-solid-state battery are improved when a sulfide-based solid electrolyte containing the bromine element is applied to the positive electrode active material coating layer.

From the above, the preferred embodiments of the present invention have been described in detail, but the scope of the present invention is not limited thereto, and various modifications and improvements by those skilled in the art utilizing the basic concepts of the present invention as defined in the following claims are also within the scope of the present invention.

## Claims

1. A positive electrode for an all-solid-state battery comprising a positive electrode active material, a sulfide-based solid electrolyte, a conductive material and a binder,
wherein the sulfide-based solid electrolyte comprises a first sulfide-based solid electrolyte comprising the bromine (Br) element and a second sulfide-based solid electrolyte not comprising the bromine (Br)element,
wherein the positive electrode active material comprises a core capable of reversible adsorption and release of lithium ions; and a coating layer formed on the surface of the core,
wherein the coating layer comprises the first sulfide-based solid electrolyte.

2. The positive electrode for an all-solid-state battery according to claim 1,
wherein the first sulfide-based solid electrolyte is represented by formula 1:
[Formula 1] LiₐM¹_{b}S_{c}X¹_{d}Brₑ,
wherein M¹ is Sn, Mg, Ba, B, Al, Ga, In, Si, Ge, Pb, N, P, As, Sb, Bi, Ti, V, Cr, Mn, Fe, Co, Ni, Cu, Y, Zr, Nb, Mo, Tc, Ru, Rh, Pd, Ag, Hf, Ta, W or La, X¹ is F, Cl, Br, I, Se, Te or O, and 0<a≤6, 0<b≤6, 0<c≤6, 0≤d≤6, and 0<e≤6.

3. The positive electrode for an all-solid-state battery according to claim 1,
wherein the second sulfide-based solid electrolyte is represented by formula 2:
[Formula 2] LiₖM²ₗSₘX²ₙ,
wherein M² is Sn, Mg, Ba, B, Al, Ga, In, Si, Ge, Pb, N, P, As, Sb, Bi, Ti, V, Cr, Mn, Fe, Co, Ni, Cu, Y, Zr, Nb, Mo, Tc, Ru, Rh, Pd, Ag, Hf, Ta, W or La, X² is F, Cl, I, Se, Te or O, and 0<k≤6, 0<l≤6, 0<m≤6, and 0≤n≤6.

4. The positive electrode for an all-solid-state battery according to claim 1,
wherein the sulfide-based solid electrolyte has an argyrodite-type crystal structure.

5. The positive electrode for an all-solid-state battery according to claim 1,
wherein the first sulfide-based solid electrolyte is comprised in an amount of from 5 to 25 parts by weight, based on a total of 100 parts by weight of the first sulfide-based solid electrolyte and the second sulfide-based solid electrolyte.

6. The positive electrode for an all-solid-state battery according to claim 1,
wherein the positive electrode active material is comprised in an amount of from 50 to 95 parts by weight, based on a total of 100 parts by weight of the positive electrode.

7. The positive electrode for an all-solid-state battery according to claim 1,
wherein the sulfide-based solid electrolyte is comprised in an amount of from 5 to 49 parts by weight, based on a total of 100 parts by weight of the positive electrode.

8. The positive electrode for an all-solid-state battery according to claim 1,
wherein the positive electrode active material includes 1 to 20 parts by weight of a first sulfide-based solid electrolyte, based on a total of 100 parts by weight of the positive electrode active material comprising a core and a coating layer.

9. The positive electrode for an all-solid-state battery according to claim 1,
wherein the first sulfide-based solid electrolyte has an average particle diameter of from 0.1 to 5 µm being a median diameter (D50) measured using a laser particle diameter distribution meter.

10. The positive electrode for an all-solid-state battery according to claim 1,
wherein the second sulfide-based solid electrolyte has an average particle diameter of from 0.1 to 5 µm being a median diameter (D50) measured using a laser particle diameter distribution meter.

11. The positive electrode for an all-solid-state battery according to claim 1,
wherein the thickness of the coating layer of the positive electrode active material is 0.05 to 0.2 µm.

12. An all-solid-state battery, comprising
a positive electrode;
a negative electrode; and
a solid electrolyte layer disposed between the positive electrode and negative electrode,
wherein the positive electrode comprises the positive electrode of any one of claims 1 to 11.

## Patentansprüche

1. Positive Elektrode für eine Festkörperbatterie, umfassend ein aktives Material der positiven Elektrode, einen Festelektrolyten auf Basis von Sulfid, ein leitfähiges Material und ein Bindemittel,
wobei der Festelektrolyt auf Basis von Sulfid einen ersten Festelektrolyten auf Basis von Sulfid, der das Element Brom (Br) umfasst, und einen zweiten Festelektrolyten auf Basis von Sulfid, der das Element Brom (Br) nicht umfasst, umfasst,
wobei das aktive Material der positiven Elektrode einen Kern, der zur reversiblen Adsorption und Freisetzung von Lithiumionen fähig ist; und eine auf der Oberfläche des Kerns gebildete Beschichtungsschicht umfasst,
wobei die Beschichtungsschicht den ersten Festelektrolyten auf Basis von Sulfid umfasst.

2. Positive Elektrode für eine Festkörperbatterie nach Anspruch 1,
bei der der erste Festelektrolyt auf Basis von Sulfid durch Formel 1 dargestellt wird:
[Formel 1] LiₐM¹_{b}S_{c}X¹_{d}Brₑ,
wobei M¹ Sn, Mg, Ba, B, Al, Ga, In, Si, Ge, Pb, N, P, As, Sb, Bi, Ti, V, Cr, Mn, Fe, Co, Ni, Cu, Y, Zr, Nb, Mo, Tc, Ru, Rh, Pd, Ag, Hf, Ta, W oder La ist, X¹ F, Cl, Br, I, Se, Te oder O ist und 0<a≤6, 0<b≤6, 0<c≤6, 0≤d≤6 und 0<e≤6 gilt.

3. Positive Elektrode für eine Festkörperbatterie nach Anspruch 1,
bei der der zweite Festelektrolyt auf Basis von Sulfid durch Formel 2 dargestellt wird:
[Formel 2] LiₖM²ₗSₘX²ₙ,
wobei M² Sn, Mg, Ba, B, Al, Ga, In, Si, Ge, Pb, N, P, As, Sb, Bi, Ti, V, Cr, Mn, Fe, Co, Ni, Cu, Y, Zr, Nb, Mo, Tc, Ru, Rh, Pd, Ag, Hf, Ta, W oder La ist, X² F, Cl, I, Se, Te oder O ist und 0<k≤6, 0<l≤6, 0<m≤6 und 0≤n≤6 gilt.

4. Positive Elektrode für eine Festkörperbatterie nach Anspruch 1,
bei der der Festelektrolyt auf Basis von Sulfid eine Kristallstruktur vom Argyrodit-Typ aufweist.

5. Positive Elektrode für eine Festkörperbatterie nach Anspruch 1,
bei der der erste Festelektrolyt auf Basis von Sulfid in einer Menge von 5 bis 25 Gewichtsteilen, bezogen auf insgesamt 100 Gewichtsteile des ersten Festelektrolyten auf Basis von Sulfid und des zweiten Festelektrolyten auf Basis von Sulfid, enthalten ist.

6. Positive Elektrode für eine Festkörperbatterie nach Anspruch 1,
bei der das aktive Material der positiven Elektrode in einer Menge von 50 bis 95 Gewichtsteilen, bezogen auf insgesamt 100 Gewichtsteile der positiven Elektrode, enthalten ist.

7. Positive Elektrode für eine Festkörperbatterie nach Anspruch 1,
bei der der Festelektrolyt auf Basis von Sulfid in einer Menge von 5 bis 49 Gewichtsteilen, bezogen auf insgesamt 100 Gewichtsteile der positiven Elektrode, enthalten ist.

8. Positive Elektrode für eine Festkörperbatterie nach Anspruch 1,
bei der das aktive Material der positiven Elektrode 1 bis 20 Gewichtsteile eines ersten Festelektrolyten auf Basis von Sulfid, bezogen auf insgesamt 100 Gewichtsteile des aktiven Materials der positiven Elektrode, das einen Kern und eine Beschichtungsschicht umfasst, enthält.

9. Positive Elektrode für eine Festkörperbatterie nach Anspruch 1,
bei der der erste Festelektrolyt auf Basis von Sulfid einen mittleren Teilchendurchmesser von 0,1 bis 5 µm aufweist, der ein mittlerer Durchmesser (D50) ist, der unter Verwendung eines Laserteilchendurchmesserverteilungsmessgeräts gemessen wird.

10. Positive Elektrode für eine Festkörperbatterie nach Anspruch 1,
bei der der zweite Festelektrolyt auf Basis von Sulfid einen mittleren Teilchendurchmesser von 0,1 bis 5 µm aufweist, der ein mittlerer Durchmesser (D50) ist, der unter Verwendung eines Laserteilchendurchmesserverteilungsmessgeräts gemessen wird.

11. Positive Elektrode für eine Festkörperbatterie nach Anspruch 1,
bei der die Dicke der Beschichtungsschicht des aktiven Materials der positiven Elektrode 0,05 bis 0,2 µm beträgt.

12. Festkörperbatterie, umfassend
eine positive Elektrode;
eine negative Elektrode; und
eine Festelektrolytschicht, die zwischen der positiven Elektrode und der negativen Elektrode angeordnet ist,
wobei die positive Elektrode die positive Elektrode nach einem der Ansprüche 1 bis 11 umfasst.

## Revendications

1. Électrode positive pour une batterie tout-solide comprenant un matériau actif d'électrode positive, un électrolyte solide à base de sulfure, un matériau conducteur et un liant,
dans laquelle l'électrolyte solide à base de sulfure comprend un premier électrolyte solide à base de sulfure comprenant l'élément brome (Br) et un deuxième électrolyte solide à base de sulfure ne comprenant pas l'élément brome (Br),
dans laquelle le matériau actif d'électrode positive comprend un noyau capable d'adsorption réversible et de libération d'ions de lithium ; et une couche de revêtement formée sur la surface du noyau,
dans laquelle la couche de revêtement comprend le premier électrolyte solide à base de sulfure.

2. Électrode positive pour une batterie tout-solide selon la revendication 1,
dans laquelle le premier électrolyte solide à base de sulfure est représenté par la formule 1 :
[Formule 1] LiₐM¹_{b}S_{c}X¹_{d}Brₑ,
dans laquelle M¹ est Sn, Mg, Ba, B, AL, Ga, In, Si, Ge, Pb, N, P, As, Sb, Bi, Ti, V, Cr, Mn, Fe, Co, Ni, Cu, Y, Zr, Nb, Mo, Tc, Ru, Rh, Pd, Ag, Hf, Ta, W ou La, X¹ est F, CI, Br, I, Se, Te ou O, et 0<a≤6, 0<b≤6, 0<c≤6, 0≤d≤6 et 0<e≤6.

3. Électrode positive pour une batterie tout-solide selon la revendication 1,
dans laquelle le deuxième électrolyte solide à base de sulfure est représenté par la formule 2 :
[Formule 2] LiₖM²ₗSₘX²ₙ,
dans laquelle M² est Sn, Mg, Ba, B, AI, Ga, In, Si, Ge, Pb, N, P, As, Sb, Bi, Ti, V, Cr, Mn, Fe, Co, Ni, Cu, Y, Zr, Nb, Mo, Tc, Ru, Rh, Pd, Ag, Hf, Ta, W ou La, X² est F, CI, I, Se, Te ou O, et 0<k≤6, 0<l≤6, 0<m≤6 et 0≤n≤6.

4. Électrode positive pour une batterie tout-solide selon la revendication 1,
dans laquelle l'électrolyte solide à base de sulfure a une structure cristalline de type argyrodite.

5. Électrode positive pour une batterie tout-solide selon la revendication 1,
dans laquelle le premier électrolyte solide à base de sulfure est compris dans une quantité de 5 à 25 parties en poids, sur la base d'un total de 100 parties en poids du premier électrolyte solide à base de sulfure et du deuxième électrolyte solide à base de sulfure.

6. Électrode positive pour une batterie tout-solide selon la revendication 1,
dans laquelle le matériau actif d'électrode positive est compris dans une quantité de 50 à 95 parties en poids, sur la base d'un total de 100 parties en poids de l'électrode positive.

7. Électrode positive pour une batterie tout-solide selon la revendication 1,
dans laquelle l'électrolyte solide à base de sulfure est compris dans une quantité de 5 à 49 parties en poids, sur la base d'un total de 100 parties en poids de l'électrode positive.

8. Électrode positive pour une batterie tout-solide selon la revendication 1,
dans laquelle le matériau actif d'électrode positive inclut 1 à 20 parties en poids d'un premier électrolyte solide à base de sulfure, sur la base d'un total de 100 parties en poids du matériau actif d'électrode positive comprenant un noyau et une couche de revêtement.

9. Électrode positive pour une batterie tout-solide selon la revendication 1,
dans laquelle le premier électrolyte solide à base de sulfure a un diamètre moyen de particule de 0,1 à 5 µm étant un diamètre médian (D50) mesuré en utilisant un appareil de mesure de répartition de diamètre particulaire par laser.

10. Électrode positive pour une batterie tout-solide selon la revendication 1,
dans laquelle le deuxième électrolyte solide à base de sulfure a un diamètre moyen de particule de 0,1 à 5 µm étant un diamètre médian (D50) mesuré en utilisant un appareil de mesure de répartition de diamètre particulaire par laser.

11. Électrode positive pour une batterie tout-solide selon la revendication 1,
dans laquelle l'épaisseur de la couche de revêtement du matériau actif d'électrode positive est 0,05 à 0,2 µm.

12. Batterie tout-solide, comprenant
une électrode positive ;
une électrode négative ; et
une couche d'électrolyte solide disposée entre l'électrode positive et l'électrode négative,
dans laquelle l'électrode positive comprend l'électrode positive selon l'une quelconque des revendications 1 à 11.
